# EUROPEAN PATENT APPLICATION

(11) **EP 4 481 966 A1**
(43) Date of publication of application: **25.12.2024**
(21) Application number: 24182812.8
(22) Date of filing: 18.06.2024
(51) Int. Cl.: H02G 3/08, B60L 53/16, B60L 53/31, H02G 3/10

(54) **EV CHARGER MODULAR DESIGN**

(30) Priority: 19.06.2023 US 202363508911 P; 24.01.2024 US 202418421047
(71) Applicant: Computime Ltd., Shatin New Territories (HK)
(72) Inventor: Shum, Wai Yin, Shatin (HK); Ho, Chi Shing, Shatin (HK)
(74) Representative: Mollekopf, Gerd Willi

(57) **Abstract**

An EV charger includes a modular housing system that includes a first housing and a second housing. The first housing is adapted to enclose electrical circuitry that connects power source inputs from a power source input cable to EV charging outputs of an EV charging output cable. The first housing includes a first port and a second port. The first housing receives the input cable through the first port and sends the output cable through the second port. The second housing includes multiple ports. The second housing receives the output cable through one of its ports. The second housing further includes an EV charging socket or a tethered EV charger connector for charging an EV. In one embodiment, the second housing can be separated from the first housing using a conduit. In another embodiment, the second housing can be directly connected to the first housing.

## Description

### FIELD OF THE INVENTION

The teachings herein relate to a modular housing for an electric vehicle (EV) charger. More particularly the teachings herein relate to apparatus and methods that employ two separate housings that allow an electric charger to be easily reconfigured for different types of EV charging connectors or easily installed in different locations.

### BACKGROUND

The slower adoption of EVs in some countries has been linked to the lack of availability of EV chargers. Although EV chargers are widely available for purchase and have been on the market for some time, several factors have led to their lack of use in many locations. First, and most importantly, the standards for EV charging have continued to evolve. For example, in the United States, many EV manufacturers have decided to abandon previous charger types in favor of the Tesla connector. Consumers are unlikely to purchase an EV charger if it is unlikely to work with the next EV they purchase.

Another factor limiting the purchase of EV chargers is the applicability of the chargers to the wide variety of locations where they can be installed. Like gas station pumps, conventional EV chargers all seem to have a similar design. Unlike gas stations, however, an EV charger can be installed almost anywhere. As a result, an EV charger with one design may not fit well in all locations. The problem often arises when installing an EV charger in the home. For example, the electrical outlet in a home garage may be on the side of the EV opposite the side with the charging port. As a result, a homeowner is often faced with having to rewire their garage to make the EV charger more convenient. Then, if the homeowner gets a car with a charging port on the other side, the wiring has to be changed again.

As a result, there is an unmet need for EV chargers that provide flexibility in changing the type of connectors used and that are adaptable to the location in which they are installed.

### DISCLOSURE OF THE INVENTION

The invention is defined in the independent claims. Particular embodiments are set out in the dependent claims.

According to the invention an electric vehicle (EV) charger housing system is provided, comprising: a first housing adapted to enclose first electrical circuitry that connects power source inputs from a power source input cable to EV charging outputs of EV charging output cable, wherein the first housing comprises a first port adapted to receive the input cable and a second port adapted to send the output cable; and a second housing adapted to enclose an EV charging socket that comprises - a third port adapted to receive the input cable, - a fourth port adapted to send the input cable to the first port, and - a fifth port adapted to receive the output cable from the second port; wherein the fourth port includes a threaded male portion that extends from the second housing and the fifth port includes a threaded male portion that extends from the second housing; and wherein the fourth port and the fifth port are positioned and sized so that, when the second housing is connected to the first housing, the fourth port is coaxially aligned with the first port and fits within the first port, and the fifth port is coaxially aligned with the second port and fits within the second port.

Preferably the system further comprising a first conduit adapted to connect the first housing to the second housing and to transmit the output cable from the first housing to the second housing, wherein the first conduit connects the second port to the fifth port.

Preferably the first housing receives the input cable through the first port and includes the first electrical circuitry that connects the input cable to the output cable.

Preferably the second housing includes second electrical circuitry that connects the output cable to the EV charging socket to provide power to the EV charging socket.

Preferably the system further comprising an EV connector with a connector cable, wherein the second housing includes a sixth port that receives the connector cable, and wherein the second housing includes second electrical circuitry that connects the output cable to the connector cable to provide power to the EV connector.

Preferably the system further comprising a first nut that screws onto the threaded portion of the fourth port to secure the second housing to the first housing when the second housing is connected to the first housing and a second nut that screws onto the threaded portion of the fifth port to secure the second housing to the first housing when the second housing is connected to the first housing.

Preferably the second housing is connected to the first housing, the third port of the second housing receives the input cable, the fourth port of the second housing sends the input cable to the first port of the first housing, the first housing receives the input cable through the first port, the first housing includes the first electrical circuitry that connects the input cable to the output cable, the first housing sends the output cable to the second housing through the second port to the fifth port.

Preferably the second housing includes second electrical circuitry that connects the output cable to the EV charging socket to provide power to the EV charging socket.

Preferably the system further comprising an EV connector with a connector cable, wherein the second housing includes a sixth port that receives the connector cable, and wherein the second housing includes second electrical circuitry that connects the output cable to the connector cable to provide power to the EV connector.

According to the invention a method for extending the connection between housings of an EV charger is provided, comprising: receiving a power source input cable through a first port of a first housing that includes first electrical circuitry that connects the input cable to an EV charging output cable; wherein the first housing is adapted to enclose the first electrical circuitry that connects power source inputs from the input cable to EV charging outputs of the output cable, wherein the first housing comprises the first port that is adapted to receive the input cable and a second port that is adapted to send the output cable; and wherein a second housing is adapted to enclose an EV charging socket and includes - a fifth port adapted to receive the output cable from the second port; and - connecting a first conduit between the first housing and the second housing and sending the output cable from the first housing to the second housing through the first conduit, wherein the first conduit connects the second port to the fifth port.

Preferably in the method the second housing includes second electrical circuitry that connects the output cable to the EV charging socket to provide power to the EV charging socket.

Preferably in the method the second housing includes second electrical circuitry that connects the output cable to a connector cable of an EV connector to provide power to the EV connector and wherein the second housing includes a sixth port that receives the connector cable.

According a further method for directly connecting housings of an EV charger comprises: screwing a first nut onto a threaded portion of a fourth port of a second housing to secure the second housing to a first housing; screwing a second nut onto a threaded portion of a fifth port of the second housing to secure the second housing to the first housing; wherein the first housing encloses first electrical circuitry that connects power source inputs from a power source input cable to EV charging outputs of an EV charging output cable, wherein the first housing includes a first port adapted to receive the input cable and a second port adapted to send the output cable; and wherein the second housing is adapted to enclose an EV charging socket and includes - a third port adapted to receive the input cable, - the fourth port adapted to send the input cable to the first port, and - the fifth port adapted to receive the output cable from the second port; wherein the fourth port includes the threaded male portion that extends from the second housing and the fifth port includes the threaded male portion that extends from the second housing; and wherein the fourth port and the fifth port are positioned and sized so that the fourth port is coaxially aligned with the first port and fits within the first port and the fifth port is coaxially aligned with the second port and fits within the second port; and the method further comprising the steps of receiving the input cable through the third port of the second housing; sending the input cable to the first port of the first housing from the fourth port of the second housing; receiving the input cable in the first housing through the first port; and sending the output cable from the first housing to the second housing through the second port to the fifth port.

Preferably in the further method the second housing includes second electrical circuitry that connects the output cable to the EV charging socket to provide power to the EV charging socket.

Preferably in the further method the second housing includes second electrical circuitry that connects the output cable to a connector cable of an EV connector to provide power to the EV connector and wherein the second housing includes a sixth port that receives the connector cable.

### BRIEF DESCRIPTION OF THE DRAWINGS

The skilled artisan will understand that the drawings, described below, are for illustration purposes only. The drawings are not intended to limit the scope of the present teachings in any way.
Figure 1 is an exemplary diagram showing an EV charger housing system.
Figure 2 is an exemplary diagram showing how the EV charging socket of the second housing is extended away from the first housing in the housing system.
Figure 3 is an exemplary diagram showing how a tethered EV charger connector of the second housing is extended away from the first housing in the housing system.
Figure 4 is an exemplary diagram showing the second housing directly connected to the first housing in the housing system.
Figure 5 is an exemplary diagram showing how the EV charging socket of the second housing is placed directly below the first housing in the housing system.
Figure 6 is an exemplary diagram showing how a tethered EV charger connector of the second housing is placed directly below the first housing in the housing system.
Figure 7 is an exemplary flowchart showing a method for extending the connection between housings of an EV charger.
Figure 8 is an exemplary flowchart showing a method for directly connecting housings of an EV charger.
Figure 9 is an exemplary diagram showing various configurations of an EV charger using only a first housing and both first housing and second housing.
Figure 10 is an exemplary diagram showing the configuration of Figure 9 in which only the first housing is connected to a tethered EV charge connector.
Figure 11 is an exemplary diagram showing how the first housing can be wired.
Figure 12 is an exemplary diagram showing how the wires of the first housing are secured.
Figure 13 is an exemplary diagram showing the configuration of Figure 9 in which only a post-mounted second housing is directly connected to the first housing.
Figure 14 is an exemplary diagram showing the internal wiring of Figure 3.
Figure 15 is an exemplary diagram showing the internal wiring of Figure 6.

Before one or more embodiments of the present teachings are described in detail, one skilled in the art will appreciate that the present teachings are not limited in their application to the details of construction, the arrangements of components, and the arrangement of steps set forth in the following detailed description or illustrated in the drawings. Also, it is to be understood that the phraseology and terminology used herein is for the purpose of description and should not be regarded as limiting.

### DESCRIPTION OF EMBODIMENTS

As described above, although EV chargers are widely available and have been on the market for some time, several factors have led to their lack of availability in many locations. First, and most importantly, the standards for EV charging, such as the types of EV connectors used, have continued to evolve. Another factor limiting the purchase of EV chargers is the applicability of the chargers to the wide variety of locations where they can be installed.

As a result, there is an unmet need for EV chargers that provide flexibility in changing the type of connectors used and that are adaptable to the location in which they are installed.

A modular EV charger provides both flexibility in changing the type of connectors used and adaptability in tailoring the charger to the location in which it is installed. More particularly, the modular EV charger is easily converted to a tether type, socket type, extended socket, or post-mounted EV charger.

The modular EV charger includes a first housing and a second housing. The first housing is, for example, adapted to include the electrical power management circuitry. The second housing is, for example, adapted to receive electrical power from the first housing and provide that power to an EV through an onboard socket or a tethered EV charger connector. Should the EV connector type needed by a consumer change, the second housing is easily replaced with a different housing that includes a different type of onboard socket or tethered EV charger connector.

For a particular location, the first housing and the second housing can be connected. In alternative embodiments, for a different location, the first housing in a second housing can be separated but electrically connected via a wire or wire and conduit. In other words, the use of two separate housings provides flexibility in adapting the EV charger to a particular location.

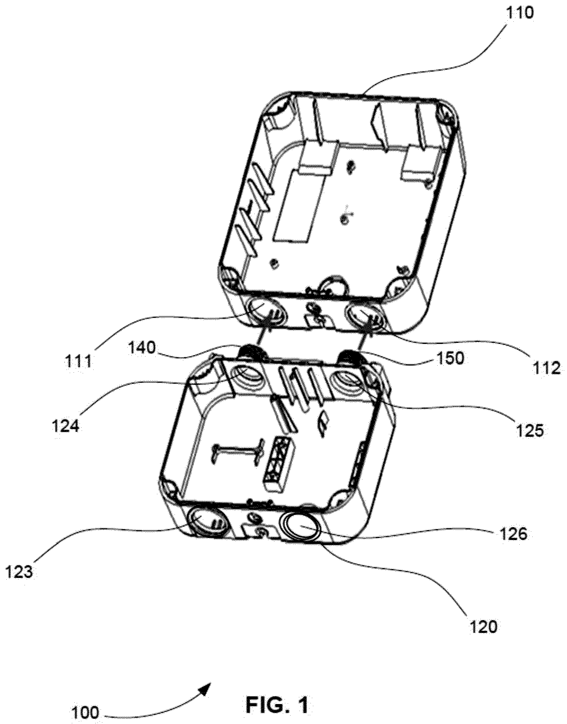

Figure 1 is an exemplary diagram 100 showing an EV charger housing system. The system of Figure 1 includes first housing 110 and second housing 120. First housing 110 and second housing 120 are shown in Figure 1 without their covers. First housing 110 and second housing 120 each may include a cover.

First housing 110 is adapted to enclose first electrical circuitry (not shown) that connects power source inputs from a power source input cable (not shown) to EV charging outputs of an EV charging output cable (not shown). First electrical circuitry can be any type of circuitry that connects the input cable to the output cable. For example, first electrical circuitry can simply be analog circuitry that connects the input cable to the output cable. First electrical circuitry can include analog circuitry, digital circuitry, or both analog and digital circuitry that is used not only to connect the input cable to the output cable but also to communicate data or control information to and from a user.

First housing 110 includes first port 111 and second port 112. First port 111 is adapted to receive the input cable into first housing 110. Second port 112 is adapted for sending the output cable from first housing 110.

Second housing 120 includes third port 123, fourth port 124, and fifth port 125. Second housing 120 is further adapted to enclose an EV charging socket (not shown). Third port 123 is adapted to receive the input cable. Fourth port 124 is adapted to send the input cable to first port 111 of first housing 110. Fifth port 125 is adapted to receive the output cable from second port 112 of first housing 110.

Fourth port 124 further includes threaded male portion 140 that extends from second housing 120. Fifth port 125 further includes threaded male portion 150 that extends from second housing 120. Fourth port 124 and fifth port 125 are positioned in size so that, when second housing 120 is connected to first housing 110, fourth port 124 is coaxially aligned with first port 111 and fits within first port 111, and fifth port 125 is coaxially aligned with second port 112 and fits within second port 112.

Second housing 120 may include sixth port 126 for receiving a cable of a tethered EV connector (not shown).

First housing 110 may be separated or extended from second housing 120 using a conduit (not shown). First housing 110 and second housing 120 may be directly connected. These different embodiments show the housing system can easily be modified to use different types of connectors or to be installed in different types of locations.

### Extended Socket or Connector

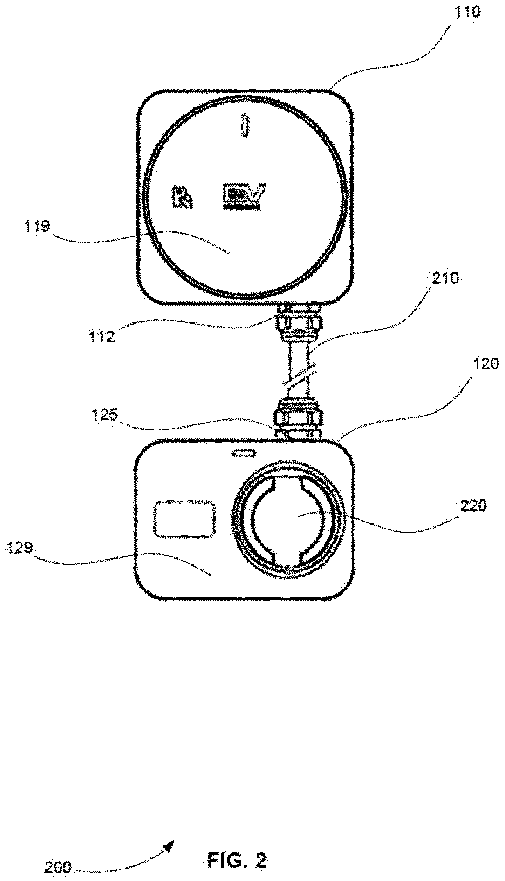

Figure 2 is an exemplary diagram 200 showing how the EV charging socket of the second housing is extended away from the first housing in the housing system. In Figure 2, second housing 120 is separated or extended from first housing 110 using first conduit 210. Specifically, first conduit 210 is adapted to connect first housing 110 to second housing 120 and to send the output cable (not shown) from first housing 110 to second housing 120. First conduit 210 connects second port 112 of first housing 110 to fifth port 125 of second housing 120.

First housing 110 receives the input cable (not shown) through the first port (not shown) and includes the first electrical circuitry (not shown) that connects the input cable to the output cable (not shown). Second housing 120 includes second electrical circuitry (not shown) that connects the output cable to EV charging socket 220 to provide power to EV charging socket 220. EV charging socket 220 is then used for EV charging.

The second electrical circuitry can be any type of circuitry that connects the output cable to EV charging socket 220. For example, the second electrical circuitry can simply be a direct connection of the wires of the output cable to the terminals of EV charging socket 220.

In Figure 2, first housing 110 includes first cover 119 and second housing 120 includes second cover 129. Second housing 120 is extended away from first housing 110, for example, to place EV charging socket 220 in a specific location to be used for EV charging.

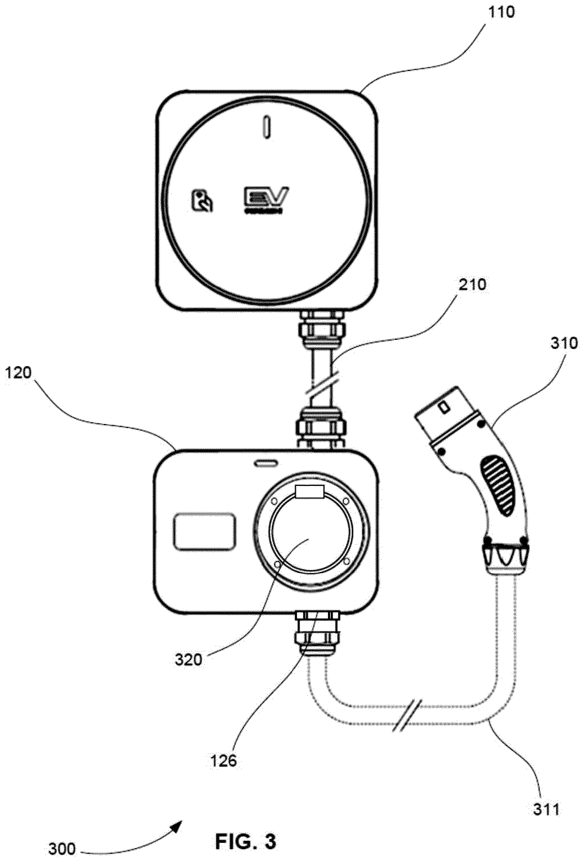

Figure 3 is an exemplary diagram 300 showing how a tethered EV charger connector of the second housing is extended away from the first housing in the housing system. In Figure 3, second housing 120 is also separated or extended from first housing 110 using first conduit 210. The housing system of Figure 3, however, further includes EV connector 310 with connector cable 311.

First housing 110 receives the input cable (not shown) through the first port (not shown) and includes the first electrical circuitry (not shown) that connects the input cable to the output cable (not shown). Second housing 120 includes sixth port 126 that receives connector cable 311. Second housing 120 includes second electrical circuitry (not shown) that connects the output cable to connector cable 311 to provide power to EV connector 310. EV connector 310 is then used for EV charging.

Again, the second electrical circuitry can be any type of circuitry that connects the output cable to EV connector 310. For example, the second electrical circuitry can simply be a direct connection of the wires of the output cable to the terminals of EV connector 310.

Second housing 120 also includes EV charging socket 320. EV charging socket 320 may be a dummy socket. In other words, EV charging socket 320 is a socket that is not connected to any power source. However, EV charging socket 320, for example, can be used to hold EV connector 310 when it is not in use. In other words, EV charging socket 320 can be used as an EV connector holder.

The second electrical circuitry can also connect the output cable to EV charging socket 320. In this case, EV charging socket 320 can also be used for EV charging.

Again, the second electrical circuitry can be any type of circuitry that connects the output cable to EV connector 310 and EV charging socket 320. For example, the second electrical circuitry can simply be a direct connection of the wires of the output cable to the terminals of EV connector 310 and the terminals of EV charging socket 320.

In the system of Figure 3, second housing 120 is extended away from first housing 110, for example, to place EV connector 310 in a specific location to be used for EV charging.

### Housings Directly Connected

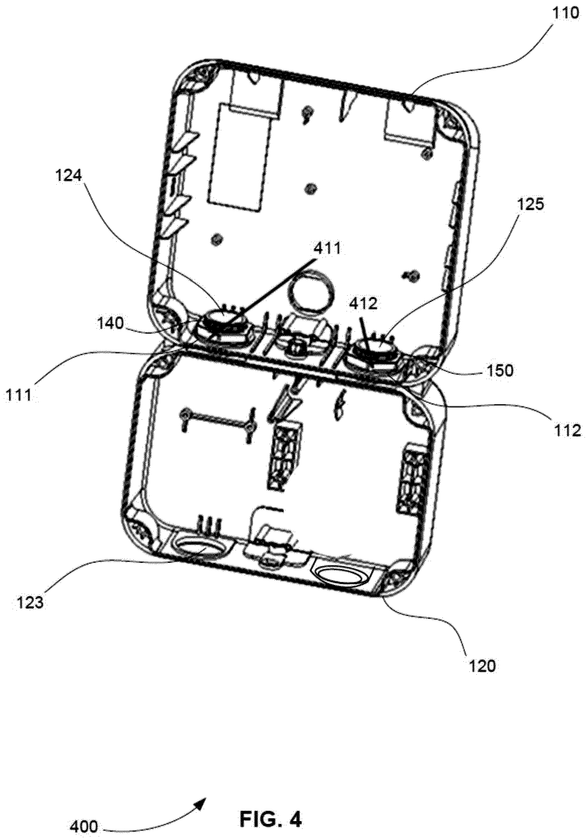

Figure 4 is an exemplary diagram 400 showing the second housing directly connected to the first housing in the housing system. In Figure 4, second housing 120 is directly connected to first housing 110. First nut 411 screws onto threaded portion 140 of fourth port 124 to secure second housing 120 to first housing 110. Second nut 412 screws onto threaded portion 150 of fifth port 125 to secure second housing 120 to first housing 110.

Third port 123 of second housing 120 receives the input cable (not shown). Fourth port 124 of second housing 120 sends the input cable to first port 111 of first housing 110. First housing 110 receives the input cable through first port 111. First housing 110 includes the first electrical circuitry (not shown) that connects the input cable to the output cable (not shown). First housing 110 sends the output cable to second housing 120 through second port 112 to fifth port 125.

Second housing 120 may be directly connected to first housing 110 to provide power to the EV charging socket (not shown) included in second housing 120. Second housing 120 includes second electrical circuitry (not shown) that connects the output cable (not shown) to the EV charging socket to provide power to the EV charging socket.

Again, the second electrical circuitry can be any type of circuitry that connects the output cable to the EV charging socket. For example, the second electrical circuitry can simply be a direct connection of the wires of the output cable to the terminals of the EV charging socket.

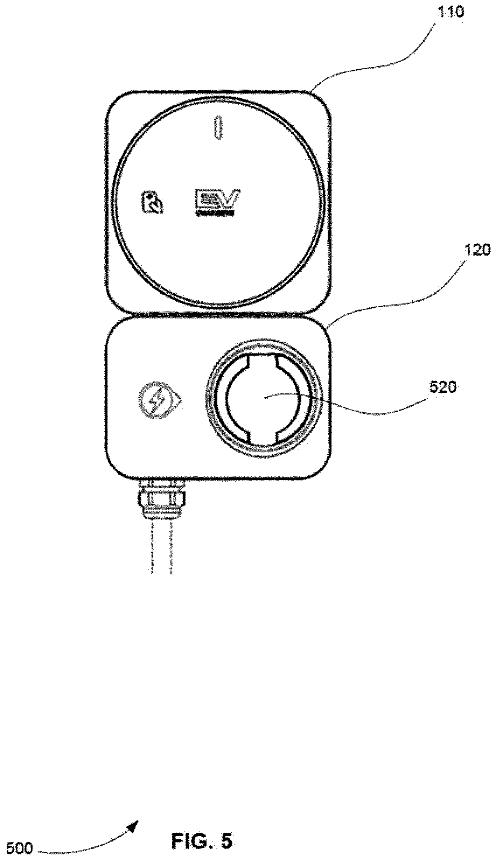

Figure 5 is an exemplary diagram 500 showing how the EV charging socket of the second housing is placed directly below the first housing in the housing system. In Figure 5, second housing 120 is directly connected to first housing 110. Second housing 120 includes second electrical circuitry (not shown) that connects the output cable (not shown) to EV charging socket 520 to provide power to EV charging socket 520. EV charging socket 520 is then used for EV charging.

Again, the second electrical circuitry can be any type of circuitry that connects the output cable to the EV charging socket 520. For example, the second electrical circuitry can simply be a direct connection of the wires of the output cable to the terminals of the EV charging socket 520.

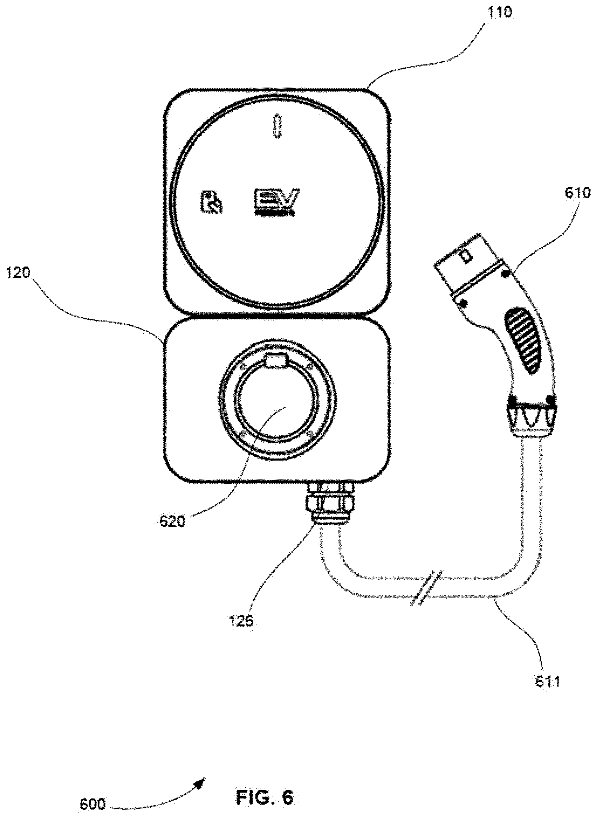

Figure 6 is an exemplary diagram 600 showing how a tethered EV charger connector of the second housing is placed directly below the first housing in the housing system. In Figure 6, second housing 120 is also directly connected to first housing 110. The housing system of Figure 6, however, further includes EV connector 610 with connector cable 611.

Second housing 120 receives the input cable (not shown) through the third port (not shown). The fourth port (not shown) of second housing 120 sends the input cable to the first port (not shown) of first housing 110. First housing 110 receives the input cable through the first port. First housing 110 includes the first electrical circuitry (not shown) that connects the input cable to the output cable (not shown). First housing 110 sends the output cable to second housing 120 through the second port of first housing 110 to the fifth port of second housing 120.

Second housing 120 includes sixth port 126 that receives connector cable 611. Second housing 120 includes second electrical circuitry (not shown) that connects the output cable to connector cable 611 to provide power to EV connector 610. EV connector 610 is then used for EV charging.

Again, the second electrical circuitry can be any type of circuitry that connects the output cable to EV connector 610. For example, the second electrical circuitry can simply be a direct connection of the wires of the output cable to the terminals of EV connector 610.

Second housing 120 also includes EV charging socket 620. EV charging socket 620 may be a dummy socket. In other words, EV charging socket 620 is a socket that is not connected to any power source. However, EV charging socket 620, for example, can be used to hold EV connector 610 when it is not in use. In other words, EV charging socket 620 can be used as an EV connector holder.

The second electrical circuitry can also connect the output cable to EV charging socket 620. In this case, EV charging socket 620 can also be used for EV charging.

Again, the second electrical circuitry can be any type of circuitry that connects the output cable to EV connector 610 and EV charging socket 620. For example, the second electrical circuitry can simply be a direct connection of the wires of the output cable to the terminals of EV connector 610 and the terminals of EV charging socket 620.

### Method for Extending Housings of an EV Charger

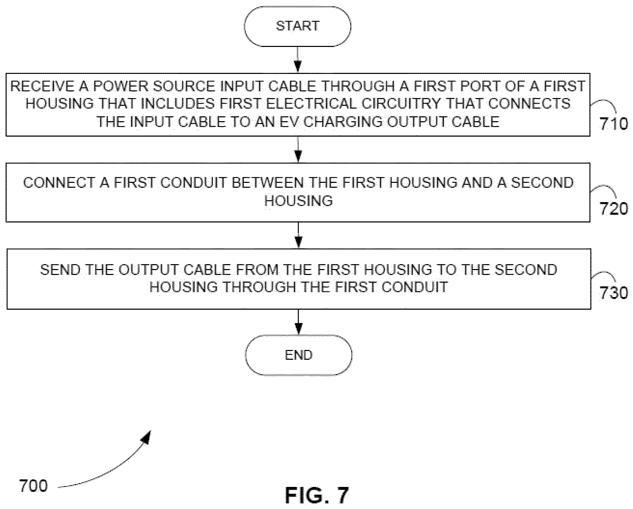

Figure 7 is an exemplary flowchart showing a method 700 for extending the connection between housings of an EV charger.

In step 710 of method 700, a power source input cable is received through a first port of a first housing that includes first electrical circuitry that connects the input cable to an EV charging output cable. The first housing is adapted to enclose the first electrical circuitry that connects power source inputs from the input cable to EV charging outputs of the output cable. The first housing includes the first port that is adapted to receive the input cable and a second port that is adapted to send the output cable. A second housing is adapted to enclose an EV charging socket and includes a fifth port adapted to receive the output cable from the second port.

In step 720, a first conduit is connected between the first housing and the second housing.

In step 730, the output cable is sent from the first housing to the second housing through the first conduit. The first conduit connects the second port to the fifth port.

### Method for Directly Connecting Housings of an EV Charger

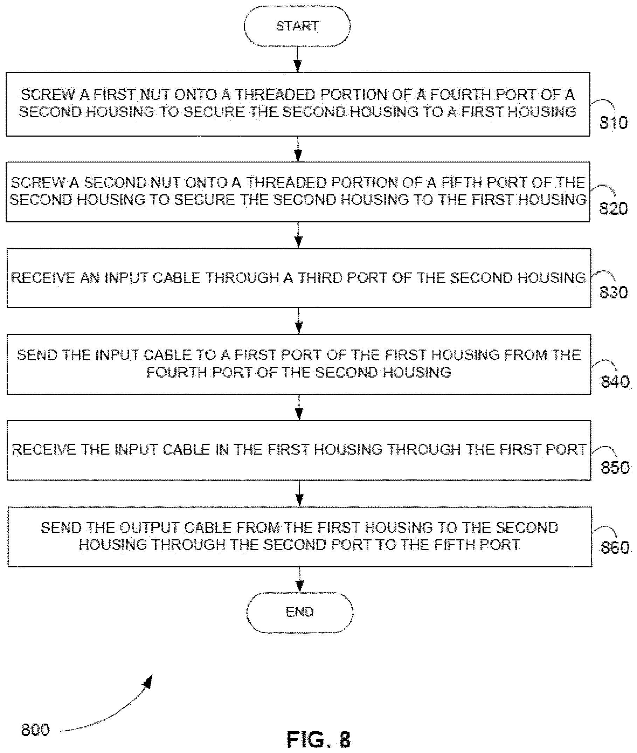

Figure 8 is an exemplary flowchart showing a method 800 for directly connecting housings of an EV charger.

In step 810 of method 800, a first nut is screwed onto a threaded portion of a fourth port of a second housing to secure the second housing to a first housing.

In step 820, a second nut is screwed onto a threaded portion of a fifth port of the second housing to secure the second housing to the first housing. The first housing encloses first electrical circuitry that connects power source inputs from a power source input cable to EV charging outputs of an EV charging output cable.

The first housing includes a first port adapted to receive the input cable and a second port adapted to send the output cable. The second housing is adapted to enclose an EV charging socket and includes a third port adapted to receive the input cable, the fourth port adapted to send the input cable to the first port, and the fifth port adapted to receive the output cable from the second port. The fourth port includes the threaded male portion that extends from the second housing. The fifth port includes the threaded male portion that extends from the second housing. The fourth port and the fifth port are positioned and sized so that the fourth port is coaxially aligned with the first port and fits within the first port and the fifth port is coaxially aligned with the second port and fits within the second port.

In step 830, the input cable is received through the third port of the second housing.

In step 840, the input cable is sent to the first port of the first housing from the fourth port of the second housing.

In step 850, the input cable is received in the first housing through the first port.

In step 860, the output cable is sent from the first housing to the second housing through the second port to the fifth port.

Figures 1 through 6 show embodiments using a first housing and a second housing. However, alternative embodiments are possible using just the first housing or using both the first housing and the second housing.

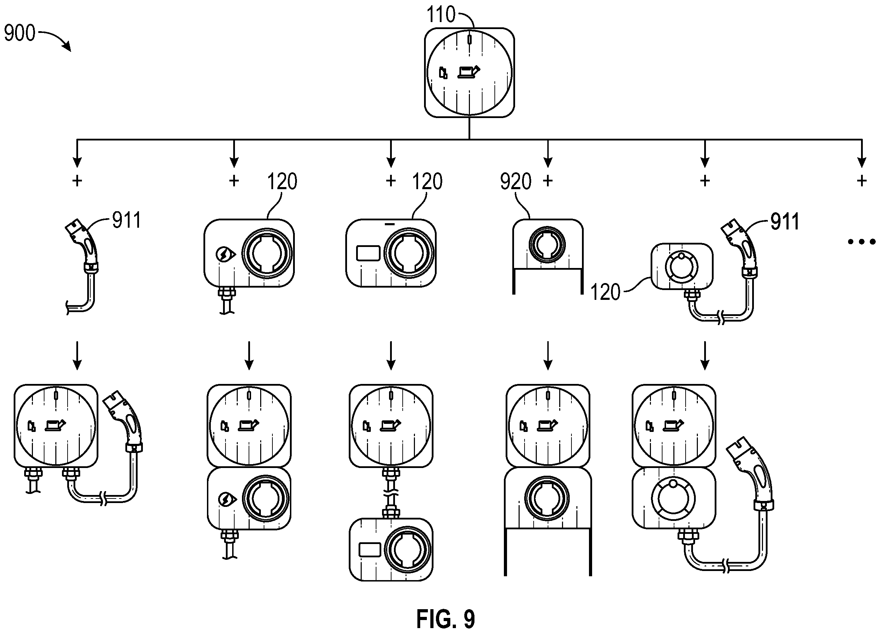

Figure 9 is an exemplary diagram 900 showing various configurations of an EV charger using only a first housing and both first housing and second housing,. In the various non-limiting configurations of Figure 9, tethered EV charger connector 911, second housing 120, post-mounted second housing 920, or second housing 120 connected to tethered EV charger connector 911 are combined with first housing 110.

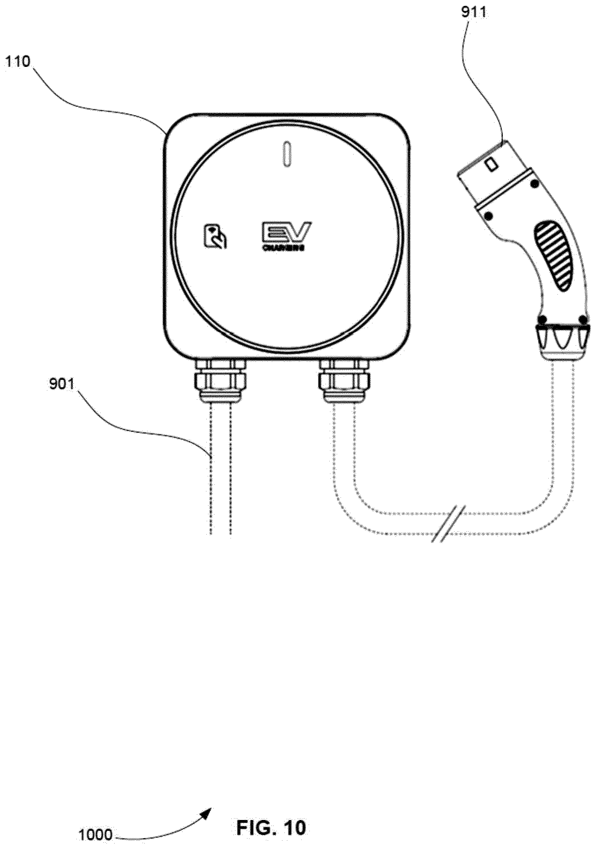

Figure 10 is an exemplary diagram 1000 showing the configuration of Figure 9 in which only the first housing is connected to a tethered EV charge connector. In Figure 10, the EV charger includes only first housing 110 and tethered EV charge connector 911. First housing 110 receives power source input cable 901, for example. Input cable 901 can be enclosed in conduit as shown in Figure 10.

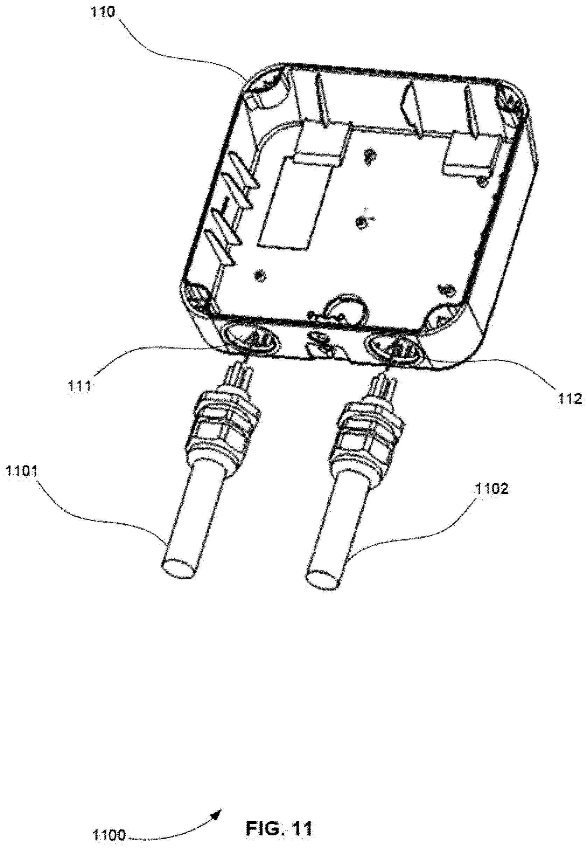

Figure 11 is an exemplary diagram 1100 showing how the first housing can be wired. First housing 110 receives first cable 1101 or first cable and conduit 11101 through first port 111. First housing 110 receives second cable 1102 or second cable and conduit 1102 through second port 112.

When connected to the second housing, as shown in Figure 2, cable 1101 or first cable and conduit 1101 is, for example, the input cable. The input cable can pass through the second housing or it can go directly to first housing 110. When connected to the second housing, as shown in Figure 2, second cable 1102 or second cable and conduit 1102 is, for example, the output cable sent to the second housing through conduit 210 in Figure 2.

When first housing 110 of Figure 11 is only connected to a tethered EV charger connector, as shown in Figure 9, cable 1101 or first cable and conduit 1101 is, for example, the input cable. When first housing 110 of Figure 11 is only connected to a tethered EV charger connector, as shown in Figure 9, second cable 1102 or second cable and conduit 1102 is, for example, the cable or cable and conduit of the tethered EV charger connector.

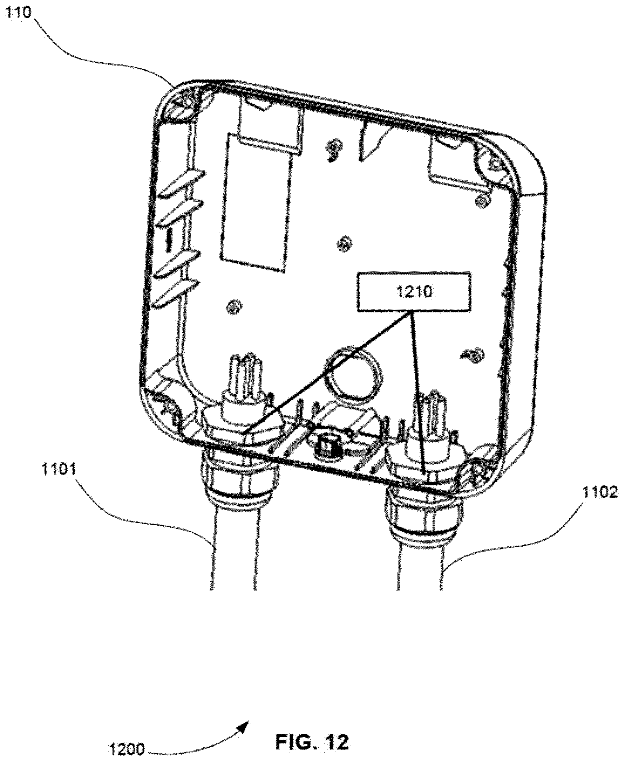

Figure 12 is an exemplary diagram 1200 showing how the wires of the first housing are secured. Each of cable 1101 or first cable and conduit 1101 and second cable 1102 or second cable and conduit 1102 are secured to housing 110 using a plastic nut 1210, for example.

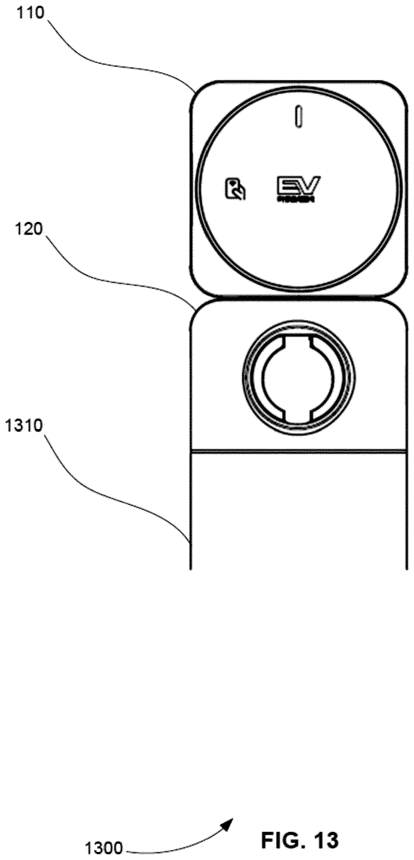

Figure 13 is an exemplary diagram 1300 showing the configuration of Figure 9 in which only a post-mounted second housing is directly connected to the first housing. In Figure 13, second housing 120 is mounted to post 1310. Second housing 120 is, in turn, directly connected to first housing 110. Second housing 120 can be connected to first housing 110 through a conduit, as shown in Figure 2.

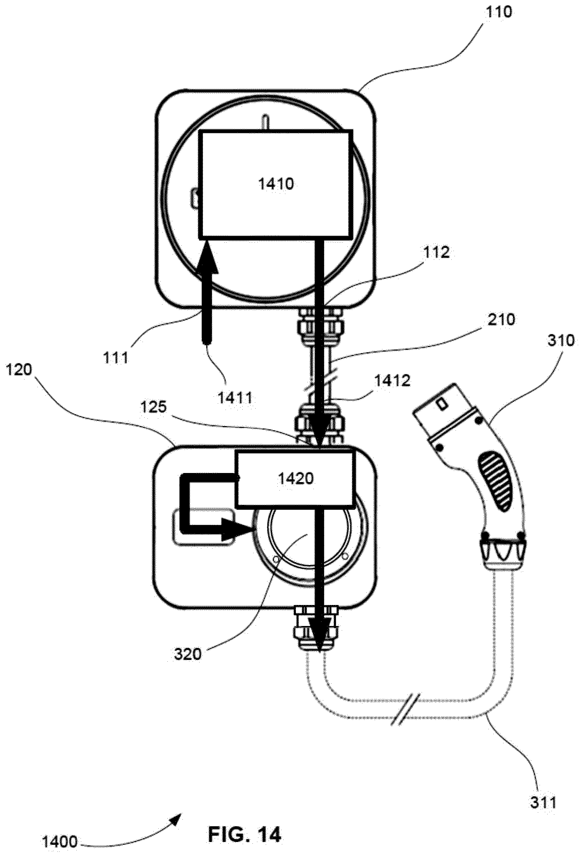

Figure 14 is an exemplary diagram 1400 showing the internal wiring of Figure 3. In Figure 14, first housing 110 receives input cable 1411 through first port 111 of first housing 110. First housing 110 includes first electrical circuitry 1410 that connects input cable 1411 to EV charging output cable 1412. First housing 110 sends output cable 1412 through second port 112 and conduit 210 to second housing 120. Second housing 120 receives output cable 1412 through fifth port 125.

Second housing 120 may connect output cable 1412 to connector cable 311 of EV connector 310. Second housing 120 may connect output cable 1412 to EV charging socket 320. Second housing 120 may connect output cable 1412 to both connector cable 311 of EV connector 310 and EV charging socket 320.

Second housing 120 may connect output cable 1412 to connector cable 311 of EV connector 310, EV charging socket 320, or both connector cable 311 of EV connector 310 and EV charging socket 320 using second electrical circuitry 1420. Again, second electrical circuitry 1420 can be any type of circuitry that connects output cable 1412 to EV connector 310, charging socket 320, or both EV connector 310 and charging socket 320. For example, second electrical circuitry 1420 can simply be a direct connection of the wires of output cable 1412 to the wires of connector cable 311 of EV connector 310 and/or the terminals of EV charging socket 320.

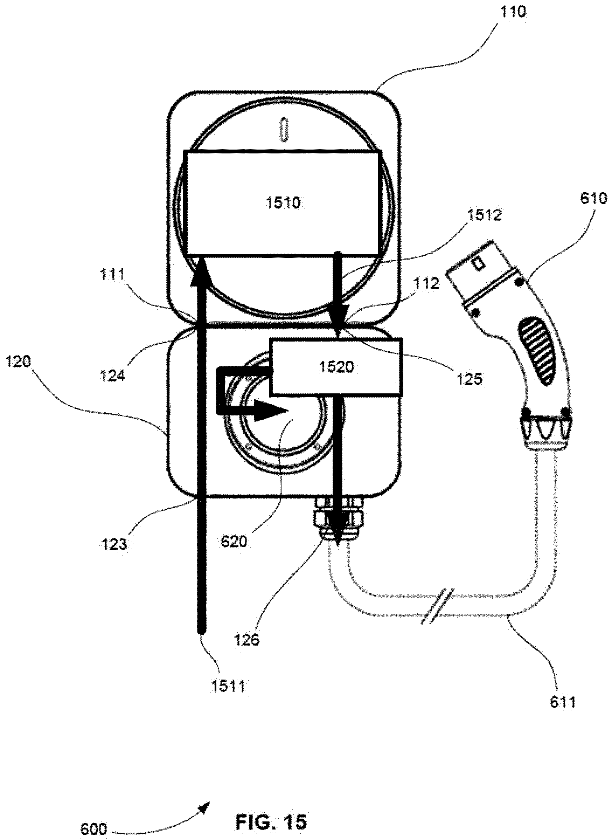

Figure 15 is an exemplary diagram 1500 showing the internal wiring of Figure 6. In Figure 15, second housing 120 receives input cable 1511 through third port 123 of second housing 120. Second housing 120 sends input cable 1511 through fourth port 124 two first housing 110. First housing 110 receives input cable 1511 through first port 111 of first housing 110. First housing 110 includes first electrical circuitry 1510 that connects input cable 1511 to EV charging output cable 1512. First housing 110 sends output cable 1512 through second port 112 and conduit 210 to second housing 120. Second housing 120 receives output cable 1512 through fifth port 125.

Second housing 120 may connect output cable 1512 to connector cable 611 of EV connector 610. Second housing 120 may connect output cable 1512 to EV charging socket 620. Second housing 120 may connect output cable 1512 to both connector cable 611 of EV connector 610 and EV charging socket 620.

Second housing 120 may connect output cable 1512 to connector cable 611 of EV connector 610, EV charging socket 620, or both connector cable 611 of EV connector 610 and EV charging socket 620 using second electrical circuitry 1520. Again, second electrical circuitry 1520 can be any type of circuitry that connects output cable 1512 to EV connector 610, charging socket 620, or both EV connector 610 and charging socket 620. For example, second electrical circuitry 1520 can simply be a direct connection of the wires of output cable 1512 to the wires of connector cable 611 of EV connector 610 and/or the terminals of EV charging socket 620.

While the present teachings are described in conjunction with various embodiments, it is not intended that the present teachings be limited to such embodiments. On the contrary, the present teachings encompass various alternatives, modifications, and equivalents, as will be appreciated by those of skill in the art.

Further, in describing various embodiments, the specification may have presented a method and/or process as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims. In addition, the claims directed to the method and/or process should not be limited to the performance of their steps in the order written.

## Claims

1. An electric vehicle (EV) charger housing system (100), comprising:
a first housing (110) adapted to enclose first electrical circuitry (1410, 1510) that connects power source inputs from a power source input cable (901, 1101, 1411, 1511) to EV charging outputs of EV charging output cable (1102, 1412, 1512), wherein the first housing (110) comprises a first port (111) adapted to receive the input cable (901, 1101, 1411, 1511) and a second port (112) adapted to send the output cable (1102, 1412, 1512); and
a second housing (120) adapted to enclose an EV charging socket (220, 320, 520, 620) that comprises:
a third port (123) adapted to receive the input cable (901, 1101, 1411, 1511),
a fourth port (124) adapted to send the input cable (901, 1101, 1411, 1511) to the first port (111), and
a fifth port (125) adapted to receive the output cable (1102, 1412, 1512) from the second port (112),
wherein the fourth port (124) includes a threaded male portion (140) that extends from the second housing (120) and the fifth port (125) includes a threaded male portion (150) that extends from the second housing (120), and
wherein the fourth port (124) and the fifth port (125) are positioned and sized so that, when the second housing (120) is connected to the first housing (110), the fourth port (124) is coaxially aligned with the first port (111) and fits within the first port, and the fifth port (125) is coaxially aligned with the second port (112) and fits within the second port.

2. The system of claim 1, further comprising a first conduit (210) adapted to connect the first housing (110) to the second housing (120) and to transmit the output cable (1102, 1412, 1512) from the first housing (110) to the second housing (120), wherein the first conduit (210) connects the second port (112) to the fifth port (125).

3. The system of claim 1 or 2, wherein the first housing (110) is configured to receive the input cable (901, 1101, 1411, 1511) through the first port (111) and includes the first electrical circuitry (1410, 1510) that connects the input cable to the output cable (1102, 1412, 1512).

4. The system of claim 1, 2 or 3, wherein the second housing (120) includes second electrical circuitry (1420, 1520) that connects the output cable to the EV charging socket (220, 320, 520, 620) to provide power to the EV charging socket.

5. The system of any of the preceding claims, further comprising an EV connector (310, 610) with a connector cable (311, 611), wherein the second housing (120) includes a sixth port (126) that is configured to receive the connector cable (311, 611), and
wherein the second housing (120) includes second electrical circuitry (1420, 1520) that connects the output cable to the connector cable to provide power to the EV connector (310, 610).

6. The system of any of the preceding claims, further comprising
a first nut (411, 1210) that is configured to screw onto the threaded portion (140) of the fourth port (124) to secure the second housing (120) to the first housing (120) when the second housing is connected to the first housing and
a second nut (412, 1210) that is configured to screw onto the threaded portion (150) of the fifth port (125) to secure the second housing to the first housing when the second housing is connected to the first housing.

7. The system of any of the preceding claims, wherein
the second housing (120) is connected to the first housing (110),
the third port (123) of the second housing is configured to receive the input cable,
the fourth port (124) of the second housing is configured to send the input cable to the first port (111) of the first housing,
the first housing (110) is configured to receive the input cable through the first port (111),
the first housing includes the first electrical circuitry (1410, 1510) that connects the input cable to the output cable, the first housing is configured to send the output cable to the second housing (120) through the second port (112) to the fifth port (125).

8. A method for extending the connection between housings of an EV charger (100), comprising:
receiving a power source input cable (901, 1101, 1411, 1511) through a first port (111) of a first housing (110) that includes first electrical circuitry (1410, 1510) that connects the input cable to an EV charging output cable (1102, 1412, 1512),
wherein the first housing (110) is adapted to enclose the first electrical circuitry (1410, 1510) that connects power source inputs from the input cable to EV charging outputs of the output cable, wherein the first housing (110) comprises the first port (111) that is adapted to receive the input cable and a second port (112) that is adapted to send the output cable, and
wherein a second housing (120) is adapted to enclose an EV charging socket (220, 320, 520, 620) and includes a fifth port (125) adapted to receive the output cable from the second port (112); and
connecting a first conduit (210) between the first housing (110) and the second housing (120) and sending the output cable (1102, 1412, 1512)from the first housing to the second housing through the first conduit (210), wherein the first conduit connects the second port (112) to the fifth port (125).

9. The method of claim 8, wherein the second housing (120) includes second electrical circuitry (1420, 1520) that connects the output cable to the EV charging socket (220, 320, 520, 620) to provide power to the EV charging socket.

10. The method of claim 8 or 9,
wherein the second housing (120) includes second electrical circuitry (1420, 1520) that connects the output cable to a connector cable (311, 611) of an EV connector (310, 610) to provide power to the EV connector and
wherein the second housing (120) includes a sixth port (126) that receives the connector cable (311, 611).

11. A method for directly connecting housings of an EV charger (100), comprising:
screwing a first nut (411, 1210) onto a threaded portion (140) of a fourth port (124) of a second housing (120) to secure the second housing to a first housing (110);
screwing a second nut (412, 1210) onto a threaded portion (150) of a fifth port (125) of the second housing to secure the second housing to the first housing,
wherein the first housing (110) encloses first electrical circuitry (1410, 1510) that connects power source inputs from a power source input cable (901, 1101, 1411, 1511) to EV charging outputs of an EV charging output cable (1102, 1412, 1512),
wherein the first housing (120) includes a first port (111) adapted to receive the input cable and a second port (112) adapted to send the output cable and
wherein the second housing (120) is adapted to enclose an EV charging socket (220, 320, 520, 620) and includes:
a third port (123) adapted to receive the input cable,
the fourth port (124) adapted to send the input cable to the first port (111), and
the fifth port (125) adapted to receive the output cable from the second port (112),
wherein the fourth port (124) includes the threaded male portion (140) that extends from the second housing (120) and the fifth port (125) includes the threaded male portion (150) that extends from the second housing, and wherein the fourth port (124) and the fifth port (125) are positioned and sized so that the fourth port (124) is coaxially aligned with the first port (111) and fits within the first port and the fifth port (125) is coaxially aligned with the second port (112) and fits within the second port;
receiving the input cable (901, 1101, 1411, 1511) through the third port (123) of the second housing;
sending the input cable to the first port (111) of the first housing (110) from the fourth port (124) of the second housing;
receiving the input cable (901, 1101, 1411, 1511) in the first housing through the first port (111); and
sending the output cable (1102, 1412, 1512) from the first housing (110) to the second housing (120) through the second port (112) to the fifth port (125).

12. The method of claim 11, wherein the second housing (120) includes second electrical circuitry (1420, 1520) that connects the output cable to the EV charging socket (220, 320, 520, 620) to provide power to the EV charging socket.

13. The method of claim 11 or 12, wherein the second housing (120) includes second electrical circuitry (1420, 1520) that connects the output cable to a connector cable (311, 611) of an EV connector (310, 610) to provide power to the EV connector and wherein the second housing (120) includes a sixth port (126) that receives the connector cable (311, 611).
